Europäisches Patentamt

European Patent Office

Office européen des brevets

(19)

(11) Numéro de publication: **0 015 189**
**B1**

(12) **FASCICULE DE BREVET EUROPEEN**

(45) Date de publication du fascicule de brevet:
27.01.82

(51) Int. Cl.³: **C 25 B 9/00**

(21) Numéro de dépôt: **80400186.5**

(22) Date de dépôt: **06.02.80**

(54) **Electrolyseur du type filtre-presse.**

(30) Priorité: **07.02.79 FR 7903796**

(43) Date de publication de la demande:
**03.09.80 Bulletin 80/18**

(45) Mention de la délivrance du brevet:
**27.01.82 Bulletin 82/4**

(84) Etats contractants désignés:
**AT BE CH DE GB IT NL SE**

(56) Documents cités:
**FR-A-2 394 620**
**US-A-3 432 420**

(73) Titulaire: **CREUSOT-LOIRE, 42 rue d'Anjou, F-75008 Paris (FR)**

(72) Inventeur: **Pere, Gérard, 6 rue d'Essertenne, F-71670 Le Breuil (FR)**

(74) Mandataire: **Dupuy, Louis et al, CREUSOT-LOIRE 15 rue Pasquier, F-75383 Paris Cedex 8 (FR)**

Electrolyseur du type filtre-presse

La présente invention concerne un perfectionnement aux électrolyseurs du type constitué par un empilage de cellules élémentaires d'électrolyse.

Les électrolyseurs industriels, tels que ceux destinés à la production d'hydrogène et d'oxygène par électrolyse de l'eau, sont constitués par un empilage d'un très grand nombre de cellules élémentaires d'électrolyse, cet empilage étant maintenu entre deux plaques d'extrémité par des tirants tels que ceux décrits dans le brevet US 3 432 420 ou dans la demande Française FR-A-2 394 620, et l'ensemble étant généralement placé dans une enceinte dont l'intérieur est préssurisé et porté à température élevée.

Afin d'éviter d'une part des fuites par les joints d'étanchéité entre les cellules en cas de serrage insuffisant des tirants, et d'autre part un fluage de ces joints d'étanchéité en cas de serrage escessif, il est nécessaire d'exercer sur chaque tirant un serrage adéquat, ni trop faible, ni trop intense. Par ailleurs, afin d'éviter une ouverture au niveau des joints d'étanchéité, il est nécessaire de garder les deux plaques d'extrémité bien parallèles et par suite d'avoir un serrage de l'ensemble des tirants uniformisé en conséquence.

L'électrolyseur de l'invention permet d'assurer ces deux fonctions. Il est caractérisé en ce que chacun des tirants comporte un dispositif de serrage variable commandé à distance et muni d'un dispositif de mesure dudit serrage, et en ce que l'ensemble desdits dispositifs est relié à un boitier commun d'asservissement en effort et en position.

L'invention sera mieux comprise à l'aide de la description suivante d'un exemple de réalisation, en référence aux dessins annexés dans lesquels:

— la figure 1 est une vue d'ensemble schématique de l'électrolyseur conforme à l'invention;
— la figure 2 montre le détail d'un des dispositifs de serrage de tirant selon l'invention;
— la figure 3 est une vue schématique selon la direction F de la figure 1;
— la figure 4 montre les dispositifs de mesure associés à un des dispositifs de serrage selon l'invention, ainsi que leurs liaisons avec le boitier commun d'asservissement conforme à l'invention.

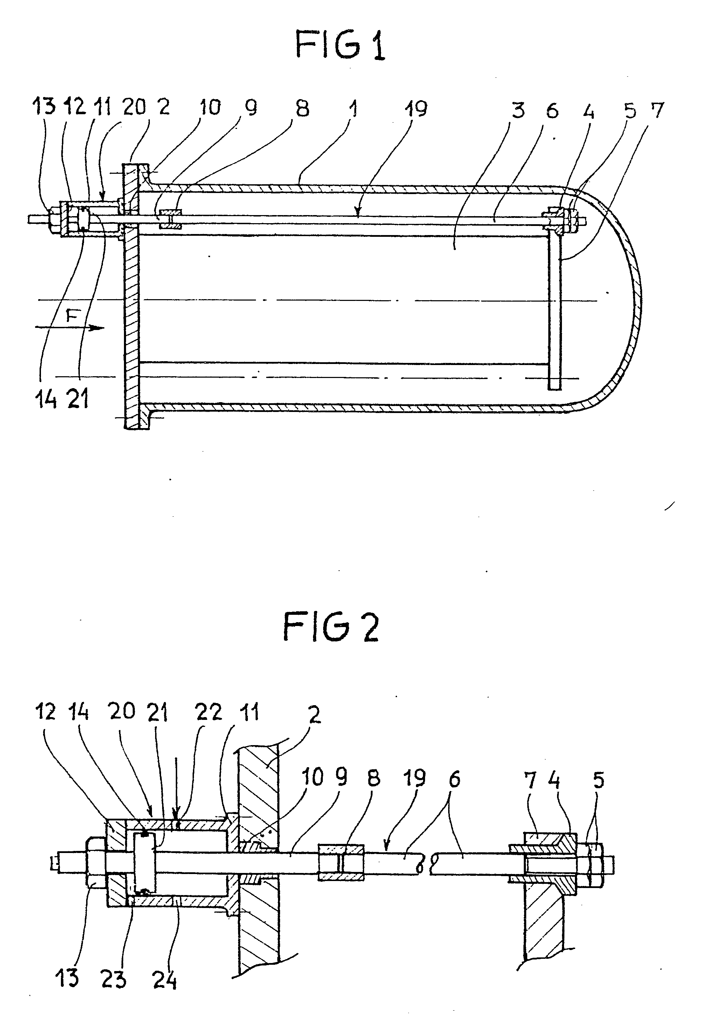

On reconnait sur la figure 1 un électrolyseur industriel constitué par un empilage 3 d'un grand nombre (pouvant aller jusqu'à plusieurs milliers) de cellules élémentaires d'électrolyse. De manière classique, l'empilage 3 est tenu en place entre une plaque de base 2 et une plaque d'extrémité 7 par un certain nombre de tirants 19, dont on a représenté un seul d'entre eux sur le dessin, mais qui sont, dans l'exemple considéré, au nombre de huit comme on le voit sur la figure 3. Par ailleurs, l'empilage 3 est inclus dans une enveloppe cylindrique 1 qui forme, avec la plaque de base 2, une enceinte d'électrolyseur, normalement préssurisée en cours de fonctionnement.

Comme on le voit sur la figure 1, et plus en détails sur la figure 2, chaque tirant 19 est constitué par deux tiges 6 et 9 assemblées par un manchon 8. A sa partie aval, chaque tirant est fixé à la plaque d'extrémité 7 à travers une entretoise 4, par un ensemble 5 à écrou et contre-écrou. Par contre, à sa partie amont, chaque tirant est fixé à la plaque de base 2, et à travers une entretoise 10, à un vérin hydraulique 20 de traction, dont un renflement 21 de la tige 9 constitute le piston.

Le verin 20 comporte un corps 11, une plaque de fermeture 12, une entrée 22 de fluide hydraulique, une sortie 23 de fuite de fluide hydraulique, et un orifice 24 servant de prise de mesure de pression du fluide hydraulique dans le corps de vérin. Un segment 14 assure l'étanchéité entre le piston 21 et le corps de vérin. Enfin, un écrou de sécurité 13 es placé en bout de la tige 9, à l'extérieur de la plaque de fermeture 12, à une distance convenable de celle-ci; il a pour but d'éviter un desserrage excessif en cas d'effondrement de la pression d'huile dans le vérin 20. Conformément à l'invention, on obtient un serrage plus ou moins intense du tirant 19 en ajustant la pression de fluide hydraulique amené dans le corps du vérin 20 par l'entrée 22.

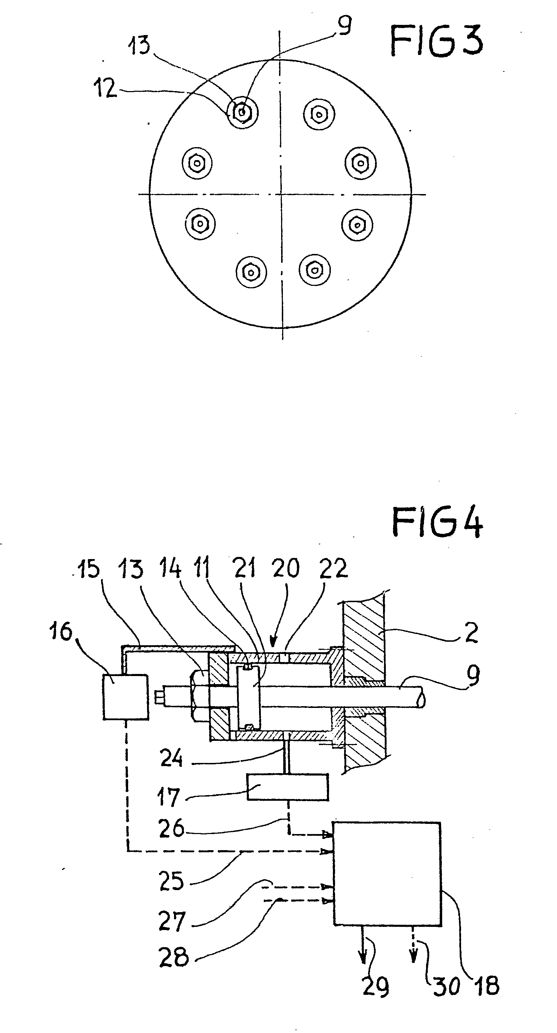

La figure 4 montre les dispositifs de mesure et d'asservissement associés aux huit vérins 20 conformément à l'invention. Comme on le voit sur le dessin à l'extrémité amont de chaque tige 9 est associé un capteur de déplacement 16, tel qu'un capteur à courants de foucault, porté par le corps de vérin 11 à l'aide d'un support 15. Ce capteur 16 fournit un signal électrique que l'on entre, par une connection 25 dans un boitier 18 d'asservissement en effort et pression constitué par un calculateur de type courant. Par ailleurs, à la prise de pression 24 est relié un capteur de pression 17 fournissant également un signal électrique entré, par une connection 26, également dans le calculateur. Les références 27 et 28 désignent d'autres entrées dans le calculateur 18 provenant de signaux issus d'autres vérins, et les références 29 et 30 désignent des sorties de signaux indiquant chacune la pression hydraulique à appliquer à chaque vérin en fonction des données fournies par le calculateur 18 en réponse à ses signaux d'entrée tels que 25 et 26.

En fonctionnement, et de manière classique, on a affiché dans le calculateur 18 les valeurs de consigne relatives aux différents serrages nécessaires pour obtenir l'intensité de serrage optimale et l'équilibrage nécessaire au paral- lèlisme des deux plaques de maintien 7 et 2, et celuici fournit, en fonction de tout écart de déplacement d'une ou plusieurs tiges 9, les signaux de commande de pression nécessaires pour assurer à l'ensemble les tensions préaffichées en conséquence.

L'invention trouve son utilisation dans la production d'hydrogène et d'oxygène par électrolyse de l'eau.

## Revendications

1. Electrolyseur du type constitué par un empilage de cellules élémentaires d'électrolyse, ledit empilage étant maintenu entre deux plaques d'extrémité reliées par des tirants, caractérisé en ce que chacun desdits tirants (19) comporte un dispositif de tension variable (20) commandé à distance et muni d'un dispositif de mesure (16) de ladite tension, et en ce que l'ensemble desdits dispositifs est relié à un boitier commun (18) d'asservissement en effort et en position.

2. Electrolyseur selon la revendication 1, caractérisé en ce que lesdits dispositifs de tension variable sont constitués par des vérins (20), en ce que lesdits dispositifs de mesure comportent des capteurs de déplacement (16) des tiges de vérin, et en ce que des capteurs de pression (17) également reliés audit boitier d'asservissement (18) sont associés auxdits vérins.

## Patentansprüche

1. Elektrolyseapparat des Typs, der aus einem Stapel von Elementar-Elektrolyse-Zellen besteht, wobei dieser Stapel zwischen zwei End-Platten gehalten ist, die durch Spannstäbe miteinander verbunden sind, dadurch gekennzeichnet, daß jeder der Spannstäbe (19) eine Vorrichtung (20) zur Veränderung der Spannung aufweist, die ferngesteuert und mit einer Vorrichtung (16) zur Messung der Spannung versehen ist, und daß die gesamte, aus den genannten Vorrichtungen bestehende Anordnung mit einem gemeinsamen Gehäuse (18) zur Steuerung des Kraftaufwandes und der Stellung verbunden ist.

2. Elektrolyseapparat nach Anspruch 1, dadurch gekennzeichnet, daß die Vorrichtungen zur Spannungsveränderung durch Arbeits-Zylinder (20) gebildet sind, daß die Meßvorrichtungen Meßfühler (16) für die Lageveränderung der Schäfte der Zylinder aufweisen und daß Druckfühler (17), die ebenfalls mit dem Steuergehäuse verbunden sind, den Arbeitszylindern zugeordnet sind.

## Claims

1. An electrolyser of the type consisting of a stack of elementary electrolytic cells, the said stack being held between two end plates connected by tierods, characterized in that each of the said tierods (19) includes a remote-controlled variable-tension device (20) equipped with a device (16) for measurement of the said tension, and in that the whole of the said devices is connected to a common casing (18) for control of force and position.

2. An electrolyser as in Claim 1, characterized in that the said variable-tension devices consist of jacks (20), in that the said devices for measurement include pick-ups (16) of the displacement of the rods of the jacks, and in that pressure pick-ups (17) likewise connected to the said control casing (18) are associated with the said jacks.

# FIG 1

13 12 11 20 2 10 9 8 1 19 3 6 4 5 7

F

14 21

# FIG 2

12 14 20 21 22 11 2

10 9 8 19 6 7 4 5

13 23 24

FIG 3

FIG 4